# EUROPEAN PATENT APPLICATION

(11) **EP 4 796 830 A1**
(43) Date of publication of application: **26.08.2026**
(21) Application number: 25165634.4
(22) Date of filing: 24.03.2025
(51) Int. Cl.: F16N 3/12, F16N 11/04

(54) **CARTRIDGE LOCKING STRUCTURE FOR GREASE GUNS**

(30) Priority: 19.02.2025 TW 114201689 U
(71) Applicant: King Cho Machinery Industrial Co., Ltd., Taichung City 401012 (TW)
(72) Inventor: Hung, Fu Tien, 411033 Taichung City (TW)
(74) Representative: Cabinet Chaillot

(57) **Abstract**

A cartridge locking structure of a grease gun includes a gun body having a storage space with an opening. An elastic member and a cartridge are located in the storage space. A top cover is mounted to the opening of the gun body. A lever is connected to the top cover. An adapter ring assembly is located between the opening of the gun body and the top cover. The adapter ring assembly includes a first adapter ring and a second adapter ring. When the second adapter ring is mounted to a first connecting threaded hole of the first adapter ring, a second connecting threaded hole of the second adapter ring is connected to the outlet of the cartridge. When the second adapter ring is not used, the first connecting threaded hole of the first adapter ring is connected to the outlet of another cartridge.

## Description

### BACKGROUND OF THE INVENTION

### 1. Fields of the invention

The present invention relates to a manual lubricating device, and more particularly, to a cartridge locking structure of a grease gun that can be used in low-temperature environments.

### 2. Descriptions of Related Art

Existing mechanical devices operate mostly rely on various lubricants to maintain normal operation of interconnected mechanical joint components while reducing wear to increase the lifespan of mechanical devices. Among these, grease is one of the widely used lubricants.

As disclosed in Figure 6 of Chinese Utility Model CN206592739U "Lever-type Grease Gun", a conventional grease gun 9 comprises a gun body 91, an oil injection device 92, a channel 93, a lever 94, and a push rod 95. The push rod 95 is positioned at the bottom of the gun body 91, with the purpose of pushing the grease inside the cartridge. However, when this conventional grease gun 9 is used in low-temperature environments, the grease becomes more solidified due to temperature effects and is difficult to push, requiring the operator to forcefully push the push rod 95 to squeeze the grease into the conventional grease gun 9, making the process arduous, labor-intensive, and time-consuming. Therefore, there is a need for improvement.

The present invention intends to provide a cartridge locking structure of a grease gun that can be used in low-temperature environments so as to eliminate shortcomings mentioned above.

### SUMMARY OF THE INVENTION

The present invention relates to a cartridge locking structure of a grease gun, and comprises a gun body having a storage space with an opening. An elastic member is located in the storage space. A cartridge is located in the storage space and has an outlet. A top cover has a bottom recess for mounting around an outer circumference of the opening of the gun body. A lever is connected to an outer side of the top cover. An adapter ring assembly is located between the opening of the gun body and the bottom recess of the top cover. The adapter ring assembly includes a first adapter ring and a second adapter ring. When the second adapter ring is mounted to a first connecting threaded hole of the first adapter ring, a second connecting threaded hole of the second adapter ring is connected to the outlet of the cartridge. When the second adapter ring is not used, the first connecting threaded hole of the first adapter ring is connected to the outlet of another cartridge.

Preferably, the elastic member is a spring.

Preferably, the gun body includes a fixing screw and a fixing nut. The fixing screw is positioned at a bottom of the gun body and pivotally connected to the elastic member.

Preferably, the fixing screw has a through hole, and the elastic member has a tail end that extends through and connects to the through hole.

Preferably, the cartridge is connected to the adapter ring assembly, and the elastic member pushes up against a bottom of the cartridge to compress the elastic member. The gun body is fixedly connected to the top cover.

The primary object of the present invention is to use the elastic member to push against the bottom of the cartridge. When the operator uses the grease gun to release the grease from inside the cartridge, the elastic member provides a spring force that further compresses the cartridge upward, allowing the grease gun to dispense grease smoothly, thereby avoiding solidified grease that may become stuck due to temperature effects.

By means of the adapter ring assembly, the present invention can be applied to different models of grease cartridges. Smaller grease cartridges can be connected to the second adapter ring which is then connected to the first adapter ring and attached to the top cover. Larger grease cartridges can be directly connected to the first adapter ring and attached to the top cover, thereby making it convenient for operators to select different models of grease cartridges.

The present invention will become more obvious from the following description when taken in connection with the accompanying drawings which show, for purposes of illustration only, a preferred embodiment in accordance with the present invention.

### BRIEF DESCRIPTION OF THE DRAWINGS

Figure 1 is a schematic diagram of the grease gun cartridge locking structure of the present invention;
Figure 2 is an exploded view of the grease gun cartridge locking structure of the present invention;
Figure 3 is a cross-sectional view of the grease gun cartridge locking structure of the present invention;
Figure 4 is a schematic diagram showing the grease cartridge pushed by the elastic member of the present invention;
Figure 5 is a schematic diagram of another embodiment of the grease cartridge locking structure of the present invention, and

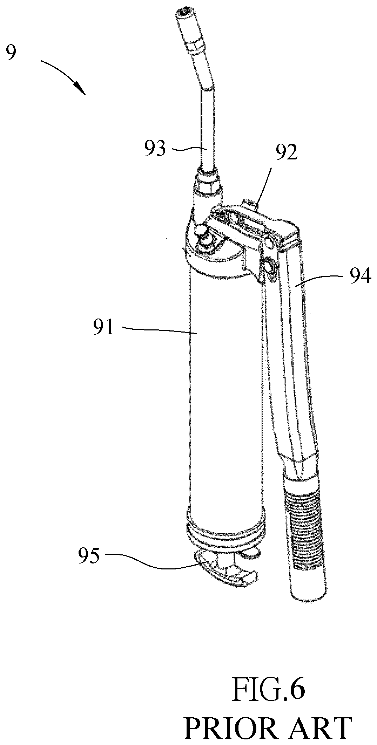

Figure 6 is a schematic diagram of a conventional grease gun.

### DETAILED DESCRIPTION OF THE PREFERRED EMBODIMENT

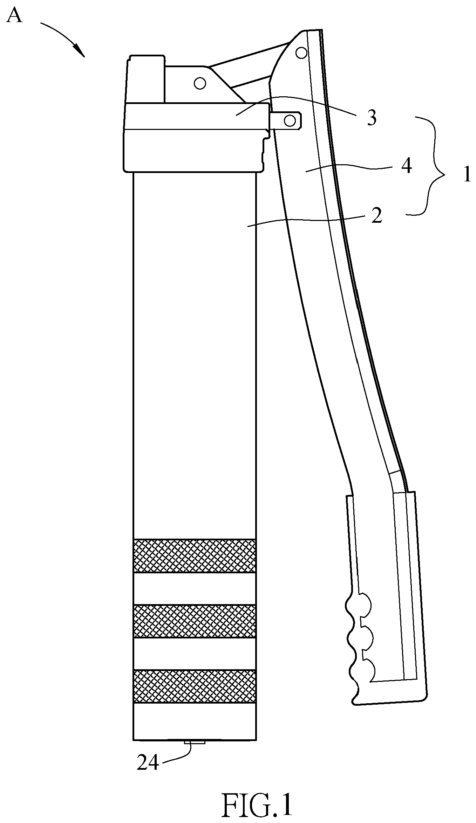

Referring to Figures 1 to 3, the cartridge locking structure of a grease gun of the present invention comprises a gun body 2, a top cover 3, a lever 4 and an adapter ring assembly 5.

The gun body 2 has a storage space 22 with an opening 21, and an elastic member 23 is located in the storage space 22. A cartridge 6 is located in the storage space 22 and has an outlet 61. The gun body 2 includes a fixing screw 24 and a fixing nut 25, wherein the fixing screw 24 is cooperated with the fixing nut 25 and is positioned at a bottom of the gun body 2. The fixing screw 24 is pivotally connected to the elastic member 23. In this embodiment, the elastic member 23 is a spring.

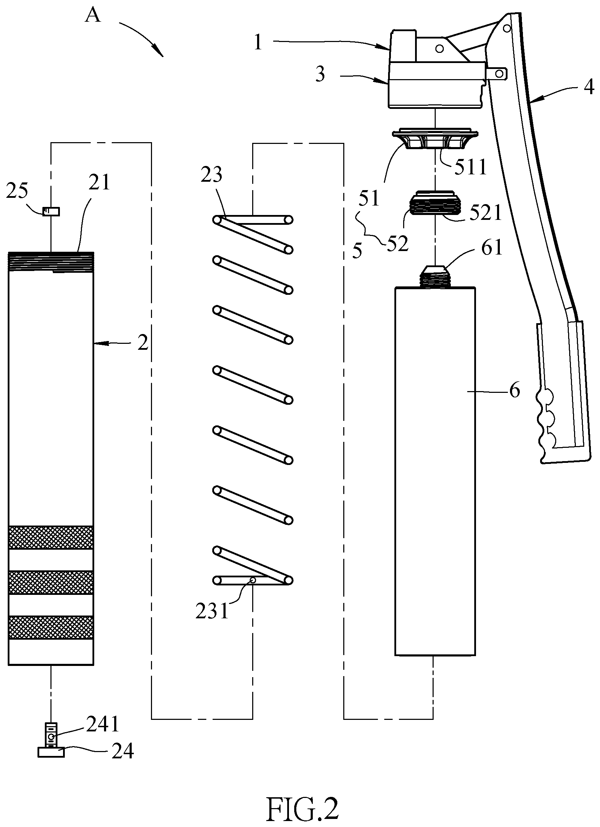

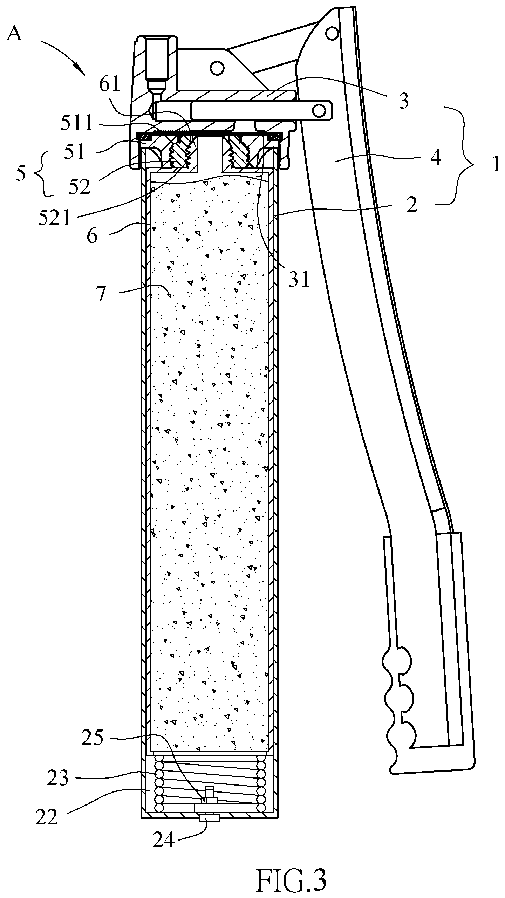

As shown in Figures 2 and 3, the top cover 3 has a bottom recess 31 for mounting around an outer circumference of the opening 21 of the gun body 2. The lever 4 is connected to an outer side of the top cover 3 as shown in Figures 1 and 2.

The adapter ring assembly 5 is located between the opening 21 of the gun body 2 and the bottom recess 31 of the top cover 3. The adapter ring assembly 5 includes a first adapter ring 51 and a second adapter ring 52. When the second adapter ring 52 is mounted to a first connecting threaded hole 511 of the first adapter ring 51, a second connecting threaded hole 521 of the second adapter ring 52 is connected to the outlet 61 of the cartridge 6.

In other words, the cartridge 6 is connected to the adapter ring assembly 5, and the elastic member 23 pushes up against a bottom of the cartridge 6 to compress the elastic member 23. The gun body 2 is fixedly connected to the top cover 3. Therefore, the combination, from top to bottom is assembled in the sequence of the top cover 3- the adapter ring assembly 5- the cartridge 6- the elastic member 23-the gun body 2.

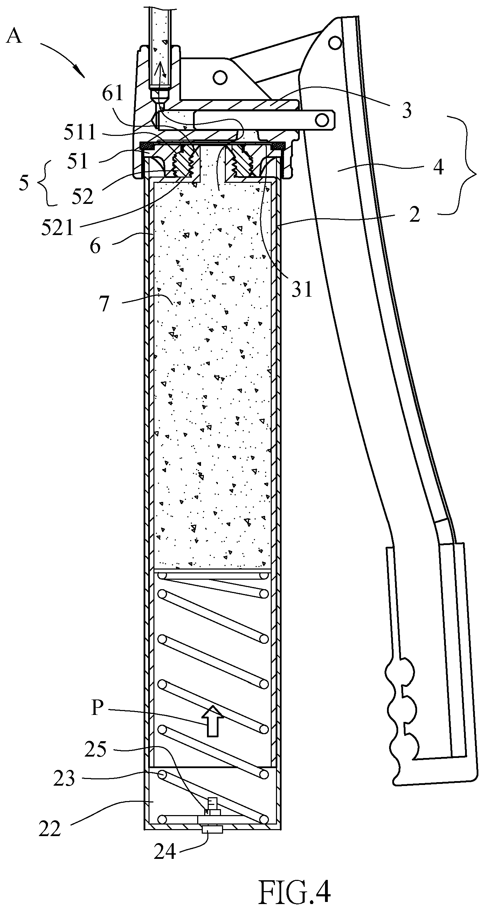

The present invention provides a better solution for the grease gun cartridge locking structure, as shown in Figures 2 to 4, wherein grease 7 tends to solidify in low-temperature environments. Conventional grease guns require forceful pushing of the push rod to dispense grease, and in more severe cases, even after pushing, the grease still cannot be dispensed smoothly. Therefore, as disclosed in the present invention, a cartridge locking structure "A" has an elastic member 23 pivotally connected to the bottom of the gun body 2 of a grease gun 1. When installing the cartridge 6 onto the top cover 3 of the grease gun 1, as the gun body 2 is mounted over the cartridge 6, the elastic member 23 is compressed and deformed by the cartridge 6, and the compressed elastic member 23 continuously applies a spring force "P" to the cartridge 6. When the operator uses the lever 4 to squeeze out grease 7, the spring force "P" causes the elastic member 23 to continuously push the cartridge 6 upward, applying additional pressure to the cartridge 6 and pushing it upward toward the top cover 3, thereby avoiding the problem of grease 7 becoming too solidified inside and unable to be dispensed smoothly.

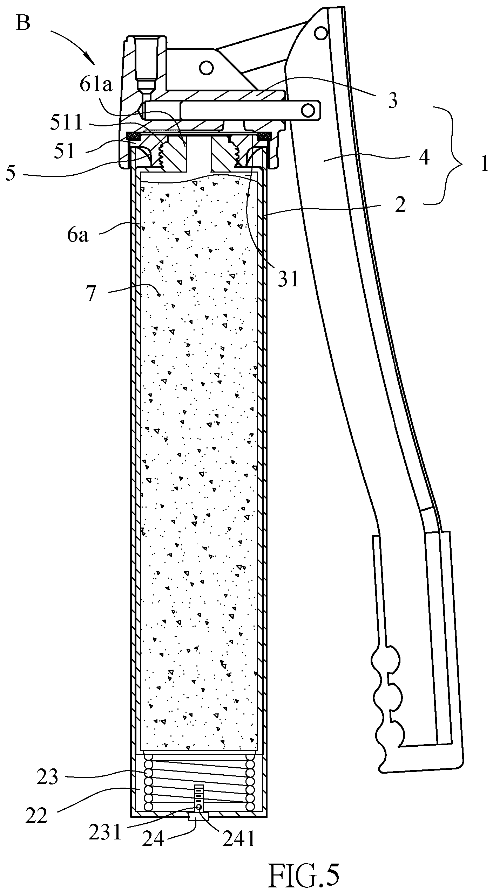

It is noted that the present invention provides another solution to the cartridge locking structure. Please refer to Figure 5, wherein for a grease gun cartridge locking structure "B" that does not use the second adapter ring 52, the first connecting threaded hole 511 of the first adapter ring 51 is connected to the outlet 61a of another cartridge 6a. Additionally, the fixing screw 24 has a through hole 241, and the fixing screw 24 is connected to the gun body 2, while the elastic member 23 has a tail end 231 that extends through the through hole 241.

While we have shown and described the embodiment in accordance with the present invention, it should be clear to those skilled in the art that further embodiments may be made without departing from the scope of the present invention.

## Claims

1. A cartridge locking structure of a grease gun, comprising:
a gun body (2) having a storage space (22) with an opening (21), an elastic member (23) located in the storage space (22), a cartridge (6) located in the storage space (22) and having an outlet (61);
a top cover (3) having a bottom recess (31) for mounting around an outer circumference of the opening (21) of the gun body (2);
a lever (4) connected to an outer side of the top cover (3), and
an adapter ring assembly (5) located between the opening (21) of the gun body (2) and the bottom recess (31) of the top cover (3), the adapter ring assembly (5) including a first adapter ring (51) and a second adapter ring (52), when the second adapter ring (52) is mounted to a first connecting threaded hole (511) of the first adapter ring (51), a second connecting threaded hole (521) of the second adapter ring (52) is connected to the outlet (61) of the cartridge (6), when the second adapter ring (52) is not used, the first connecting threaded hole (511) of the first adapter ring (51) is connected to the outlet (61) of another cartridge (6).

2. The cartridge locking structure of a grease gun as claimed in claim 1, wherein the elastic member (23) is a spring.

3. The cartridge locking structure of a grease gun as claimed in claim 2, wherein the gun body (2) includes a fixing screw (24) and a fixing nut (25), the fixing screw (24) is positioned at a bottom of the gun body (2) and pivotally connected to the elastic member (23).

4. The cartridge locking structure of a grease gun as claimed in claim 3, wherein the fixing screw (24) has a through hole (241), the elastic member (23) has a tail (231) end that extends through and connects to the through hole (241).

5. The cartridge locking structure of a grease gun as claimed in claim 1, wherein the cartridge (6) is connected to the adapter ring assembly (5), the elastic member (23) pushes up against a bottom of the cartridge (6) to compress the elastic member (23), the gun body (2) is fixedly connected to the top cover (3).
